# EUROPÄISCHE PATENTSCHRIFT

(11) **EP 2 671 703 B1**
(45) Veröffentlichungstag und Bekanntmachung des Hinweises auf die Patenterteilung: **14.11.2018**
(21) Anmeldenummer: 13167886.4
(22) Anmeldetag: 15.05.2013
(51) Int. Cl.: B29C 45/00, B29C 35/08, B29C 45/03, B29K 83/00, B29C 33/00

(54) **Verfahren und Vorrichtung zur Verarbeitung von flüssigen Silikonmassen in Spritzgussmaschinen und Spritzgusswerkzeugen**
Method and apparatus for the processing of liquid silicone masses in injection molding machines and injection molding tools
Procédé et dispositif de traitement de masses de silicone liquides dans des machines de moulage par injection et outils de moulage par injection

(30) Priorität: 04.06.2012 AT 5005112 U
(43) Veröffentlichungstag der Anmeldung: 11.12.2013
(73) Patentinhaber: ELAST Kunststoffverarbeitungs-GmbH & Co KG, 4733 Heiligenberg (AT)
(72) Erfinder: Manigatter, Kurt, 4072 Alkoven (AT); Adlesgruber, Karl, 4511 Allhaming (AT); Fattinger, Paul, 4730 Heiligenberg (AT); Reslhuber, Christian, 4491 Niederneukirchen (AT)
(74) Vertreter: Beer & Partner Patentanwälte KG

(56) Entgegenhaltungen:
- DE-A1-102010 002 141
- US-A1- 2011 133 366

## Beschreibung

Die vorliegende Erfindung betrifft ein Verfahren und eine nach diesem Verfahren arbeitende Vorrichtung zur Verarbeitung von flüssigen, lichtaktivierbaren Silikonmassen niedriger Viskosität mittels Spritzgusstechnologie, sowie eine nach dem Verfahren arbeitende Spritzgussmaschine, wobei die Vernetzung der Silikonmasse durch Einwirken von ultravioletter und/oder sichtbarer Strahlung aktiviert wird.

Spritzgussmaschinen erfordern für einen reibungslosen, voll automatisierten Produktionsverlauf eindeutig reproduzierbare Produktionsbedingungen. Bei der etwa seit 1980 bekannten Flüssigsilikontechnologie (LSR = Liquid Silicone Rubber) werden die niedrigviskosen Silikonkautschuk-Komponenten mit geeigneten Dosier- und Mischeinrichtungen miteinander vermengt und im Spritzgussverfahren bei erhöhter Temperatur im Formnest vulkanisiert. Diese Technologie erlaubt durch die kurze Vernetzungsdauer hohe Taktraten. Nachteilig bei dieser Technologie ist jedoch, dass für die Temperaturerhöhung zur Vulkanisation ein hoher Energiebedarf besteht.

Ein weiterer Nachteil ergibt sich aus dem Umstand, dass viele Thermoplasten naturbedingt bei erhöhter Temperatur zur Verformung neigen und aus diesem Umstand bisher die Verbindung eines harten, thermoplastischen Kunststoffs mit einem weichen, dauerelastischen Silikonkunststoff mittels Spritzgussverfahren nicht ohne Qualitätseinbußen möglich war. Durch die Entwicklung von lichtaktivierbaren LSR-Materialien, für deren Vernetzung im Formnest keine separate Temperaturzuführung erforderlich ist, ergeben sich nun neue Möglichkeiten, die bisherigen Probleme bei der Spritzgussverarbeitung von LSR-Materialien zu lösen.

Lichtaktivierbare Polymerzusammensetzungen, insbesondere Silikonzusammensetzungen sind seit einigen Jahren bekannt. So beschreibt beispielsweise die DE 10 2008 000 156 A1 eine durch Bestrahlung aktivierbare Hydrosilylierungsreaktion, bei der durch Bestrahlung mit UV-Licht oder mit sichtbarem Licht vernetzbare Silikonerzeugnisse hergestellt werden. Weiters beschreibt die EP 1 817 372 eine durch Bestrahlung mit Licht aktivierbare Siloxanzusammensetzung, welche die Herstellung dickwandiger, füllstoff- und/oder pigmenthaltiger Formartikel ermöglicht. Weitere Silikonzusammensetzungen, welche durch Bestrahlung mit sichtbarem Licht oder mit UV-Strahlen vernetzbar sind, sind aus der US 4 699 802, der EP 0 146 307, der US 6 376 569 oder der WO 92/10544 bekannt.
Weiters sind aus dem Stand der Technik Vorrichtungen mit transparenten Fenstern zur Bestrahlung von lichtaktivierbaren Polymeren bekannt. So beschreibt die US 5 401 155 eine Metallform mit einem lichtdurchlässigen Fenster, welches senkrecht zu einer Lichtquelle angeordnet ist. Aus der US 6 627 124 ist eine zweiteilige Form für die Herstellung von linsenförmigen Kunststoffprodukten aus lichthärtendem Polymermaterial bekannt, bei der eine Formhälfte aus lichtdurchlässigem Material besteht. Die WO 2011/101269 beschreibt ein Formnest aus zwei transparenten Wänden mit jeweils dahinter angeordneten UV-Lampen.

Ebenso zeigen die Druckschriften US 2011/133366 A1 und DE 10 2010 002141 A1 jeweils ein Verfahren sowie eine Vorrichtung zur Verarbeitung von flüssigen, lichtaktivierbaren Silikonmassen.

Es ist auch bekannt, lichtaktivierbare Silikonkautschukzusammensetzungen unmittelbar vor ihrem Einspritzen in das Formnest mit UV-Licht zu aktivieren, wobei die Lichtdosis und die Bestrahlungsdauer, sowie der verbleibende Transportweg und die Transportgeschwindigkeit so abgestimmt sein müssen, dass die Aushärtung erst im Formnest, nicht jedoch bereits vor dem Eintritt der Silikonkautschukzusammensetzung in dieses Formnest stattfindet.
Nachteilig bei all diesen Verfahren ist jedoch, dass die bestrahlte Kunststoffzusammensetzung ohne jegliche Kontrolle der Temperaturführung durchgeführt wird. Der Reaktionsverlauf von fotoaktivierten Vernetzungsprozessen ist jedoch immer abhängig von der Temperatur des Ausgangsmaterials zum Zeitpunkt der Fotoaktivierung bzw. des Beginns der Vernetzung, wobei die Temperaturabhängigkeit der Vernetzungsgeschwindigkeit naturgemäß von der spezifischen Zusammensetzung des Ausgangsmaterials und seinen Zusatzstoffen abhängt.
Aufgabe der Erfindung ist die Bereitstellung eines Verfahrens und einer nach diesem Verfahren arbeitenden Spritzgussvorrichtung zum Spritzgießen von flüssigen, lichtaktivierbaren Silikonmassen niedriger Viskosität bei reduziertem Energieverbrauch und hoher Taktrate, welche gegebenenfalls auch eine qualitativ hochwertige Verbindung zwischen LSR und Thermoplasten ermöglicht. Weiters stellt sich die Erfindung die Aufgabe eine Spritzgussmaschine zur Verfügung zu stellen, welche die Herstellung von geformten Thermoplasten und ihre zumindest teilweise Ummantelung mit LSR in einem zweistufigen Arbeitsgang ermöglicht.
Diese Aufgaben werden durch ein Verfahren mit den technischen Merkmalen aus Anspruch 1 bzw. durch eine Vorrichtung mit den technischen Merkmalen aus Anspruch 5 gelöst. Vorteilhafte Weiterentwicklungen sind Gegenstand der abhängigen Ansprüche.
Die Erfindung wird nachstehend anhand der Figuren näher erläutert. Darin zeigen:
- Fig. 1: eine Schrägansicht einer möglichen Ausführungsform der erfindungsgemäßen Vorrichtung;
- Fig. 2: eine Seitenansicht der Vorrichtung aus Fig. 1, wobei die Vorrichtung zur besseren Erkennbarkeit wesentlicher Details nach der Temperiereinrichtung bis zum Formnest im Schnitt dargestellt ist;
- Fig. 3: einen Detailausschnitt aus Fig. 2 in vergrößerter Darstellung;
- Fig. 4: eine mögliche Ausführungsform eines nachgerüsteten, herkömmlichen Spritzgusswerkzeuges;
- Fig. 5: die Vorrichtung aus Fig. 4 in Kombination mit einem Spritzgusswerkzeug zur Herstellung von thermoplastischen Formlingen;
- Fig. 6: eine Detailansicht einer alternativen Ausführung nach Fig. 4 zur Verbindung eines thermoplastischen Formlings mit lichtaktivierbarem Silikon;
- Fig. 7: eine weitere alternative Ausführungsform der Vorrichtung nach Fig. 4 oder Fig. 6.

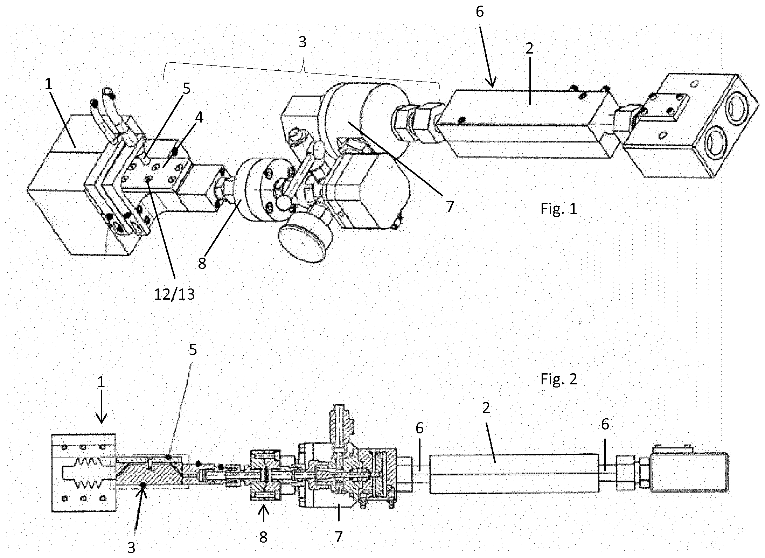

Gemäß Fig. 1 setzt sich die erfindungsgemäße Vorrichtung aus einem Formnest 1, einer Temperiereinrichtung 2 und einer Zuleitung 3 zwischen dem Formnest 1 und der Temperiereinrichtung 2 zusammen, wobei zumindest ein Teil der Zuleitung 3 aus einem transparenten Material 4 besteht und wobei innerhalb von Sacklöchern 12 im transparenten Material 4 eine oder mehrere Strahlungsquellen 5 für ultraviolettes oder sichtbares Licht vorgesehen sind. Durch die Ausbildung der Sacklöcher 12, in welche die lichtemittierenden Strahlungsquellen 5 nahezu bis zum Anschlag eintauchen, wird der zu durchstrahlende Weg im transparenten Material 4 erheblich reduziert, wodurch eine bessere Ausbeute der Lichtintensität erreicht wird. In dieser Ausführungsvariante verbleibt ein zu durchstrahlender Weg im transparenten Material 4. Je nach Anwendungsfall und Ausbildung des transparenten Materials 4 kann der zu durchstrahlende Weg zwischen 0,5 und 25 Millimeter betragen, in Ausnahmefällen auch darüber.

Durch eine gezielte Voreinstellung der Temperatur des LSR-Ausgangsmaterials in der Temperiereinrichtung 2 kann bei der fotoaktivierten Aushärtung des LSR-Ausgangsmaterials innerhalb des Formnestes 1 die Taktzeit erheblich reduziert werden. So konnte in Versuchen festgestellt werden, dass es gegenüber den bekannten Verfahren zur Strahlungsvernetzung von LSR aus dem Stand der Technik möglich ist, die Taktzeit soweit zu reduzieren, dass in derselben Zeiteinheit ein bis zu sechsfach erhöhter Ausstoß erzielbar ist.

Die Temperiereinrichtung 2 kann einen Durchtrittskanal für die Silikonmasse mit einem eingebauten statischen Mischer besitzen oder die Temperiereinrichtung 2 ist um einen statischen Mischer 6 herum angeordnet. In der Zuleitung 3 zum Formnest 1 können zusätzliche Einrichtungen zur Druckregulierung, beispielsweise Materialdruckbegrenzer 7 und gegebenenfalls Siebadapter 8 zur Abtrennung von nichtflüssigen oder zähflüssigen Bestandteilen in der Silikonmasse vorgesehen sein.

Um die Lichtaktivierung des temperierten Ausgangsmaterials zu optimieren, hat es sich als vorteilhaft erwiesen, jenen Bereich 3 der Zuleitung, welcher unmittelbar an das Formnest 1 angrenzt, aufzuweiten und abzuflachen, wobei zumindest ein Teil des abgeflachten Bereichs der Zuleitung 3 aus einem transparenten Material 4 gefertigt ist, welches Sacklöcher 12 aufweist, in denen die Emission des ultravioletten und/oder sichtbaren Lichts erfolgt, welches die Silikonmasse zu ihrer nachfolgenden Vernetzung im Formnest aktiviert. Um dies besser zu veranschaulichen, wurde in Fig. 2 insbesondere dieser Bereich der Zuleitung 3 im Schnitt dargestellt.

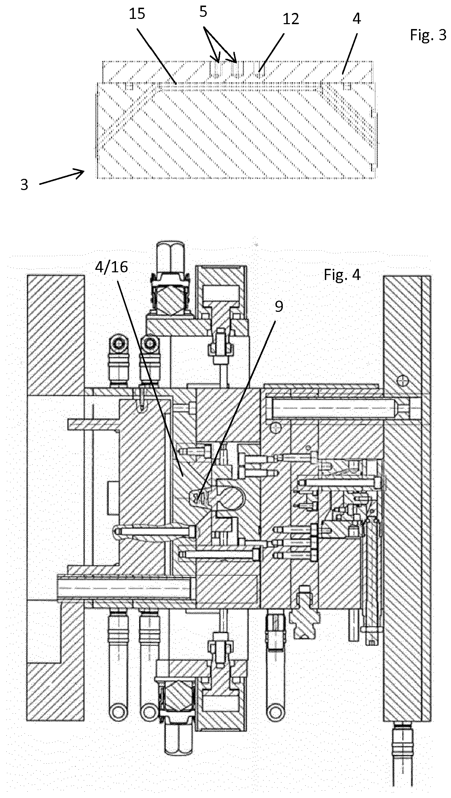

In Fig. 3 ist speziell jener abgeflachte Teil der Zuleitung 3 separat und vergrößert abgebildet. Es hat sich als vorteilhaft erwiesen, wenn die Durchstrahlungsdicke des temperierten Ausgangsmaterials in einem Durchgangskanal 15 im aufgeweiteten Bereich 3 nicht mehr als 6 mm, bevorzugt jedoch nicht mehr als 3 mm beträgt.

Das transparente Material 4 wird bevorzugt aus einem Polycarbonat oder einem Polymethylmethacrylat gefertigt. Polycarbonate sind billig in der Herstellung, hochtransparent für ultraviolettes und sichtbares Licht, leicht zu bearbeiten und besitzen eine für diesen Einsatzzweck ausreichende Temperaturstandfestigkeit.

Ist zumindest ein Teil des Formnestes 1 aus transparentem Material 4 gefertigt, so hat sich in Versuchen gezeigt, dass hier die Formnestoberfläche zu glatt für eine gute Ablösbarkeit der ausgehärteten Silikonmasse ist. Um diesem Problem zu begegnen, wurde die formgebende Oberfläche des transparenten Materials 4 im Formnest 1 geringfügig angeraut, wobei die Rauigkeit nach VDI in einem Bereich von 21 ra bis 27 ra bereits ausreichte, um eine sehr gute Ablösbarkeit des ausgehärteten Formlings zu ermöglichen. Dabei hat sich gezeigt, dass die Lichtausbeute, also die Aktivierungsgeschwindigkeit der Silikonmasse durch die raue, milchige Oberfläche des transparenten Polycarbonat-Formnestteiles in diesem Rauigkeitsbereich etwas abgenommen hat. Diese Abnahme der Lichtausbeute wird jedoch durch die Anordnung der lichtemittierenden Stelle der Strahlungsquelle 5 innerhalb eines Sackloches 12 im Vergleich zu Ausführungen nach dem Stand der Technik mehr als kompensiert.

Demgegenüber ist es jedoch nicht unbedingt erforderlich, auch das transparente Material 4 in der Zuleitung 3 auf der von der Silikonmasse benetzten Fläche aufzurauen. Bei der Entformung des Formlings löst sich das in diesem Bereich der Zuleitung 3 gehärtete Silikonmaterial ausreichend gut ab, um eine saubere Oberfläche für die folgende Silikonmasse sicher zu stellen.

Die Grundidee der erfindungsgemäßen Vorrichtung kann auch sehr gut zur Nachrüstung bestehender Spritzgussmaschinen, wie sie bisher für die Verarbeitung von temperaturvernetzter Silikonmasse verwendet wurden, herangezogen werden. In Fig. 4 ist ein herkömmliches Werkzeug einer herkömmlichen Spritzgussmaschine dargestellt, wobei jedoch ein Teil 16 des Formnestes 1 auf der Ausstoßseite durch ein transparentes Material 4 ersetzt ist. Der korrespondierende Teil der Kavität wird hier durch einen Formling 9 aus einem gehärteten Thermoplast gebildet, der teilweise in die Kavität des transparenten Materials 4 hinein ragt und von der Silikonmasse ummantelt, bzw. auch in Bohrungen durchdrungen wird, bevor die Silikonmasse durch die Aktivierung über Strahlungsquellen 5, welche innerhalb von Sacklöchern 12 im transparenten Material 4 liegt, vernetzt. Selbstverständlich ist mit dieser Vorrichtung auch die Herstellung eines lichtaktivierten Silikon-Formteils ohne geformtem Thermoplasten 9 möglich.

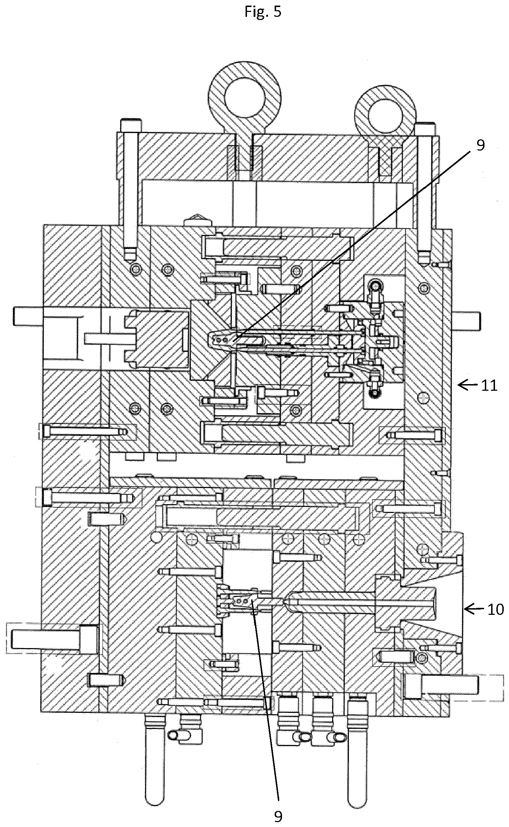

In Fig. 5 ist die Vorrichtung aus Fig. 4 in Kombination mit einem Spritzgusswerkzeug zur Herstellung von Thermoplasten dargestellt. Hier wird der Thermoplast 9 in einem ersten Spritzgusswerkzeug 10 geformt und nach dem Öffnen des Formnestes über eine hier nicht dargestellte Einrichtung, beispielsweise einen Greifer entnommen und in ein zweites Spritzgusswerkzeug 11 eingesetzt, wo es nach dem folgenden Schließen des Formnestes 1 mit dem lichtaktivierbaren Silikon teilweise ummantelt wird.

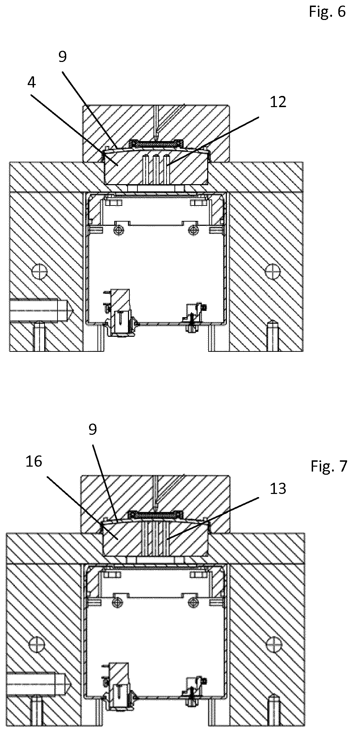

Fig. 6 zeigt eine Detailansicht im Schnitt einer Vorrichtung entsprechend Fig. 4, jedoch für einen anderen Thermoplasten 9. Hier ist die Schnittebene so angeordnet, dass die Sacklöcher 12 innerhalb des transparenten Materials 4 besser erkennbar sind. Der Thermoplast 9 bedeckt und umgreift teilweise das transparente Material 4, das Silikon gelangt über eine Einspritzleitung und die Zuleitung 3 zum Formnest 1 und wird innerhalb des Formnestes 1 lichtaktiviert, wobei das aktivierende Licht zuerst den Thermoplasten 9 durchstrahlt.

In einer erfindungsgemäßen Weiterentwicklung der Vorrichtung nach Fig. 6, dargestellt in Fig. 7, sind die Strahlungsquellen innerhalb von Durchbrüchen 13 angeordnet, welche einen Teil 16 des Formnestes 1 vollständig durchdringen, wobei ein Thermoplast 9 vorhanden ist, welcher seinerseits einen Teilbereich der Kavität ausfüllt und die Durchbrüche 13 abdeckt. Hierdurch wird der zu durchstrahlende Weg von der lichtemittierenden Stelle bis zur Silikonmasse nochmals reduziert. Diese Variante führt zu einer weiteren Optimierung der Lichtausbeute. In dieser Variante kann der Teil 16 des Formnestes 1 aus herkömmlichem, nicht transparentem Material gefertigt sein.

In einer bevorzugten weiteren Ausführungsvariante befinden sich an einem Ende der Durchbrüche 13 transparente Linsen 14, welche die Durchbrüche 13 verschließen. Auch in dieser Variante kann der Teil 16 des Formnestes 1 aus herkömmlichem, nicht transparentem Material gefertigt sein.

Zudem ist es in einer weiteren Variante der Erfindung möglich, den Bereich der Zuleitung 3 gänzlich aus herkömmlichem, nicht transparentem Material zu fertigen, wobei die Durchbrüche 13, verschlossen durch transparente Linsen 14, in einem Bauteil angeordnet sind, welcher an die Stelle des transparenten Materials 4 tritt.

Die transparenten Linsen 14 können entweder aus Glas oder aus einem transparenten Kunststoff gefertigt sein, ihre von der Silikonmasse benetze Oberfläche kann dabei vollständig plan oder eine Oberflächenrauigkeit nach VDI in einem Bereich von 21 ra bis 27 ra aufweisen.

Die lichtemittierende Strahlungsquelle 5 ist bevorzugt eine LED-Lampe mit einem Energieverbrauch von 1 bis 20 Watt, welche Licht im sichtbaren und/oder im UV-Bereich abstrahlt. Je nach Art des Silikonproduktes und des angewandten Verfahrens ist eine LED-Lampe oder sind mehrere LED-Lampen in der Zuleitung 3 und/oder im Teil 16 des Formnestes 1 angeordnet, wobei mehrere LED-Lampen flächendeckend verteilt sind. An Stelle von LED-Lampen ist es auch denkbar andere Lampen oder Lichtleiter zu verwenden, welche eine im Wesentlichen punktförmige Strahlungsquelle 5 darstellen.

Ein besonderer Vorteil der vorliegenden Erfindung liegt darin, dass die Vernetzung flüssiger Silikonmassen mit einem erheblich geringeren Energieaufwand durchgeführt wird, da bei bisherigen thermisch vernetzten Silikonmassen das Werkzeug bzw. das Formnest auf einer Temperatur von 180°C bis 220°C gehalten werden musste, wohingegen bei einer temperaturoptimierten, lichtaktivierten Vernetzung die flüssige Silikonmasse nur auf eine Temperatur von 35°C bis 75°C erwärmt wird. Besonders vorteilhaft ist dabei, dass durch die Anordnung der lichtemittierenden Stelle der Strahlungsquelle 5 innerhalb eines Sackloches 12 oder innerhalb eines Durchbruchs 13 die Strahlungsquelle 5 sehr nahe an der Silikonmasse positioniert ist, wodurch die Lichtausbeute optimiert ist.

Ein weiterer Vorteil liegt darin, dass es mit der vorliegenden Erfindung in relativ einfacher Weise möglich ist, die in Silikon verarbeitenden Betrieben weltweit vorhandenen Spritzgussmaschinen für Hochtemperaturvernetzungen auf die neue strahlungsvernetzende Technologie umzurüsten, indem in der Zuführung zur Spritzdüse eine Temperiereinheit eingebaut wird oder diese Temperiereinheit bereits mit dem statischen Mischer kombiniert wird und entweder ein Teil 16 der metallischen Formnestteile gegen transparente Formnestteile 4 ausgetauscht und die lichtemittierende Stelle von Strahlungsquellen 5 innerhalb von Sacklöchern 12 dieser Formnestteile 4 angeordnet sind, oder zwischen der Einspritzdüse und unmittelbar vor dem metallischen Formnest eine Zuleitung 3 mit einem Bereich aus transparentem Material 4 vorgesehen wird, wobei wiederum die lichtemittierende Stelle der Strahlungsquelle 5 innerhalb von Sacklöchern 12 oder Durchbrüchen 13 liegen.

Besonders vorteilhaft ist dabei, dass die bisher erforderlichen Heizungen im Werkzeug gänzlich entfallen können, wodurch die Herstellung des Werkzeuges erheblich einfacher wird.

Weiters von Vorteil ist, dass aufgrund der relativ niedrigen Silikontemperatur von unter 80°C bei einer Ummantelung von thermoplastischen Kunststoffen mit Silikonmassen keine ungewollte Formveränderung des Thermoplasten zu befürchten ist.

Der größte Vorteil ist jedoch darin zu sehen, dass es mit der vorliegenden Erfindung erstmals in sehr vorteilhafter Weise möglich wird, in einer Spritzgussmaschine niedrig temperaturbeständige thermoplastische Formlinge herzustellen und diese unmittelbar nach ihrer Härtung, wie in Fig. 5 gezeigt, in einem benachbarten Formnest, mit vernetztem Silikon zumindest teilweise zu ummanteln.

## Patentansprüche

1. Verfahren zur Verarbeitung von flüssigen, lichtaktivierbaren Silikonmassen niedriger Viskosität mittels Spritzgießen, insbesondere in vollautomatischen Spritzgussmaschinen (11), wobei die flüssige, lichtaktivierbare Silikonmasse vor ihrem Eintritt in ein Formnest (1) abhängig von ihrer Zusammensetzung temperiert und anschließend durch ultraviolette und/oder sichtbare Strahlung vernetzt wird, wobei das ultraviolette oder sichtbare Licht von Strahlungsquellen (5) stammt, die innerhalb von Sacklöchern (12) in einem transparenten Material (4) einer Zuleitung (3) zum Formnest (1) oder innerhalb von einseitig verschlossenen Durchbrüchen (13) in der Zuleitung (3) zum Formnest (1) angeordnet sind, wodurch die Strahlungsquellen (5) sehr nahe an die flüssige Silikonmasse herangeführt werden, **dadurch gekennzeichnet, dass** die Zuleitung (3) vor dem Formnest (1) aufgeweitet und abgeflacht ist, wobei die freie Querschnittsfläche der Zuleitung (3) bevorzugt stets gleich bleibt, dass zumindest ein Teil des abgeflachten Bereichs der Zuleitung (3) entweder aus einem transparenten Material (4) gefertigt und die Strahlungsquellen (5) innerhalb von Sacklöchern (12) im transparenten Material (4) positioniert sind oder die Strahlungsquellen (5) innerhalb von Durchbrüchen (13) liegen, wobei die Durchbrüche (13) an einem Ende durch eingesetzte Linsen (14) verschlossen sind.

2. Verfahren nach Anspruch 1, **dadurch gekennzeichnet, dass** die flüssige Silikonmasse auf eine Temperatur von 35°C bis 75°C, bevorzugt auf eine Temperatur von 40°C bis 60°C, und insbesondere bevorzugt auf eine Temperatur von 45°C bis 50°C vorgewärmt wird.

3. Verfahren nach Anspruch 1 oder 2, **dadurch gekennzeichnet, dass** die Taktrate unter 60 sec, bevorzugt unter 30 sec, und besonders bevorzugt zwischen 10 sec und 15 sec gewählt wird.

4. Verfahren nach Anspruch 1, 2 oder 3, **dadurch gekennzeichnet, dass** die flüssige Silikonmasse innerhalb eines Formnestes (1) und/oder innerhalb der Zuleitung (3) zum Formnest (1) mit ultravioletter und/oder sichtbarer Strahlung aktiviert wird.

5. Vorrichtung zur Verarbeitung einer flüssigen, lichtaktivierbaren Silikonmasse, insbesondere zur Durchführung eines Verfahrens nach einem der Ansprüche 1 bis 4, welche mit einem oder mehreren Vorlagebehältern für flüssige, niedrigviskose Silikonmassen über eine Zuleitung (3) verbunden ist, wobei die Vorrichtung aus einer Temperiereinrichtung (2) für die Silikonmasse, einer Zuleitung (3) zu einem Formnest (1) und einem Formnest (1) für eine oder mehrere Kavitäten besteht, wobei zumindest ein Teil der Zuleitung (3) aus einem transparenten Material (4) besteht und dass innerhalb von Sacklöchern (12) im transparenten Material (4) eine oder mehrere Strahlungsquellen (5) für ultraviolettes oder sichtbares Licht vorgesehen sind, oder dass die Zuleitung (3) aus einem nicht transparenten Material besteht und dass innerhalb von Durchbrüchen (13) in der Zuleitung (3) eine oder mehrere Strahlungsquellen (5) für ultraviolettes oder sichtbares Licht vorgesehen sind und die Durchbrüche (13) an einem Ende durch eingesetzte Linsen (14) oder durch einen in die Kavität eingelegten, geformten Thermoplast (9) verschlossen sind, **dadurch gekennzeichnet, dass** die Zuleitung (3) vor dem Formnest (1) aufgeweitet und abgeflacht ist, wobei die freie Querschnittsfläche der Zuleitung (3) bevorzugt stets gleich bleibt, dass zumindest ein Teil des abgeflachten Bereichs der Zuleitung (3) entweder aus einem transparenten Material (4) gefertigt und die Strahlungsquellen (5) innerhalb von Sacklöchern (12) im transparenten Material positioniert sind, oder die Strahlungsquellen (5) innerhalb von Durchbrüchen (13) liegen, wobei die Durchbrüche (13) an einem Ende durch eingesetzte Linsen (14) verschlossen sind.

6. Vorrichtung nach Anspruch 5, **dadurch gekennzeichnet, dass** die Temperiereinrichtung (2) einen Durchtrittskanal für die Silikonmasse mit einem eingebauten statischen Mischer (6) besitzt oder die Temperiereinrichtung (2) um einen statischen Mischer (6) herum angeordnet ist.

7. Vorrichtung nach Anspruch 5 oder 6, **dadurch gekennzeichnet, dass** in der Zuleitung (3) zum Formnest (1) zusätzliche Einrichtungen zur Druckregulierung in der Form eines Materialdruckbegrenzers (7) und gegebenenfalls ein Siebadapter (8) zur Abtrennung von nichtflüssigen oder zähflüssigen Bestandteilen in der Silikonmasse vorgesehen sind.

8. Vorrichtung nach einem der Ansprüche 5 bis 7, **dadurch gekennzeichnet, dass** der abgeflachte Bereich der Zuleitung (3) unmittelbar an das Formnest (1) grenzt und so dimensioniert ist, dass die Dicke der zu durchstrahlenden Silikonmasse im abgeflachten Bereich der Zuleitung (3) maximal 6 mm, bevorzugt maximal 3 mm beträgt.

9. Vorrichtung nach einem der Ansprüche 5 bis 8, **dadurch gekennzeichnet, dass** das transparente Material (4) aus einem Polycarbonat oder einem Polymethylmethacrylat besteht.

10. Vorrichtung nach einem der Ansprüche 5, 6, 7 oder 9, **dadurch gekennzeichnet, dass** die formgebende Oberfläche des transparenten Materials (4) des Formnestes (1) eine raue Oberflächenstruktur besitzt.

11. Vorrichtung nach Anspruch 10, **dadurch gekennzeichnet, dass** die Rauigkeit des transparenten Materials (4) des Formnestes (1) in einem Bereich von 21 ra bis 27 ra liegt, demnach zwischen 1,1 µm und 2,2 µm beträgt.

12. Vorrichtung nach einem der Ansprüche 5, 6, 7, 9 oder 10, **dadurch gekennzeichnet, dass** die Vorrichtung zur Nachrüstung bestehender Spritzgussmaschinen geeignet ist.

13. Vorrichtung nach Anspruch 5, **dadurch gekennzeichnet, dass** die Linse (14) aus Glas oder aus einem transparenten Kunststoff gefertigt ist.

14. Vorrichtung nach Anspruch 5, **dadurch gekennzeichnet, dass** die Strahlungsquelle (5) eine LED-Lampe oder eine vergleichbare, im Wesentlichen punktförmige Strahlungsquelle ist.

15. Vorrichtung nach Anspruch 14, **dadurch gekennzeichnet, dass** die LED-Lampe eine Aufnahmeleistung von 1 bis 20 Watt besitzt.

## Claims

1. Method for the processing of liquid, light-activatable silicone masses of low viscosity by means of injection molding, in particular in fully automatic injection molding machines (11), wherein the liquid, light-activatable silicone mass is tempered prior to its entry into a mold cavity (1) depending on its composition and is cross-linked then by ultraviolet and/or visible radiation, wherein the ultraviolet or visible light originates from radiation sources (5) which are arranged within blind holes (12) in a transparent material (4) of a feed line (3) to the mold cavity (1) or within unilaterally closed breakthroughs (13) in the feed line (3) to the mold cavity (1), whereby the radiation sources (5) are brought very close to the liquid silicone mass, **characterized in that** the feed line (3) in front of the mold cavity (1) is widened and flattened, wherein the free cross-sectional area of the feed line (3) preferably always remains the same, that at least a part of the flattened portion of the feed line (3) is made either of a transparent material (4) and the radiation sources (5) are positioned within blind holes (12) in the transparent material (4) or the radiation sources (5) lie within breakthroughs (13), wherein the breakthroughs (13) are closed at one end by inserted lenses (14).

2. Method according to claim 1, **characterized in that** the liquid silicone mass is preheated to a temperature of 35°C to 75°C, preferably to a temperature of 40°C to 60°C, and more preferably to a temperature of 45°C to 50°C.

3. Method according to claim 1 or 2, **characterized in that** the clock rate is chosen to be less than 60 seconds, preferably less than 30 seconds, and more preferably between 10 seconds and 15 seconds.

4. Method according to claim 1, 2 or 3, **characterized in that** the liquid silicone mass within a mold cavity (1) and/or within the feed line (3) to the mold cavity (1) is activated with ultraviolet and/or visible radiation.

5. Apparatus for processing a liquid, light-activatable silicone mass, in particular for carrying out a method according to one of the claims 1 to 4, which is connected via a feed line (3) to one or more storage containers for liquid, low-viscosity silicone masses, wherein the apparatus consists of a tempering device (2) for the silicone mass, a feed line (3) to a mold cavity (1) and a mold cavity (1) for one or more cavities, wherein at least a part of the feed line (3) consists of a transparent material (4) and that within blind holes (12) in the transparent material (4) one or more radiation sources (5) for ultraviolet or visible light are provided, or that the feed line (3) consists of a non-transparent material and that within breakthroughs (13) in the feed line (3) one or more radiation sources (5) are provided for ultraviolet or visible light and the breakthroughs (13) are closed at one end by inserted lenses (14) or by a molded thermoplastic (9) inserted into the cavity, **characterized in that** the feed line (3) in front of the mold cavity (1) is widened and flattened, wherein the free cross-sectional area of the feed line (3) preferably always remains the same, that at least a part of the flattened portion of the feed line (3) is made either of a transparent material (4) and the radiation sources (5) within blind holes (12) are positioned in the transparent material, or the radiation sources (5) lie within breakthroughs (13), wherein the breakthroughs (13) are closed at one end by inserted lenses (14).

6. Apparatus according to claim 5, **characterized in that** the tempering device (2) has a passage channel for the silicone mass with a built-in static mixer (6) or the tempering device is arranged around a static mixer (6).

7. Apparatus according to claim 5 or 6, **characterized in that** in the feed line (3) to the mold cavity (1) additional means for pressure regulation in the form of a material pressure limiter (7) and optionally a screen adapter (8) for separating non-liquid or viscous components in the silicone mass are provided.

8. Apparatus according to one of the claims 5 to 7, **characterized in that** the flattened portion of the feed line (3) is directly adjacent to the mold cavity (1) and dimensioned so that the thickness of the silicone mass to be irradiated in the flattened portion of the feed line (3) is at most 6 mm, preferably at most 3 mm.

9. Apparatus according to one of the claims 5 to 8, **characterized in that** the transparent material (4) consists of a polycarbonate or a polymethyl methacrylate.

10. Apparatus according to one of the claims 5, 6, 7 or 9, **characterized in that** the shaping surface of the transparent material (4) of the mold cavity (1) has a rough surface structure.

11. Apparatus according to claim 10, **characterized in that** the roughness of the transparent material (4) of the mold cavity (1) is in a range of 21 ra to 27 ra, and is therefore between 1.1 µm and 2.2 µm.

12. Apparatus according to one of the claims 5, 6, 7, 9 or 10, **characterized in that** the apparatus is suitable for retrofitting existing injection molding machines.

13. Apparatus according to claim 5, **characterized in that** the lens (14) is made of glass or of a transparent plastic.

14. Apparatus according to claim 5, **characterized in that** the radiation source (5) is an LED lamp or a comparable, substantially punctiform radiation source.

15. Apparatus according to claim 14, **characterized in that** the LED lamp has a power consumption of 1 to 20 watts.

## Revendications

1. Procédé de traitement de masses de silicone liquides photo-activables de faible viscosité par moulage par injection, en particulier dans des machines de moulage par injection entièrement automatiques (11), dans lequel la masse de silicone liquide photo-activable est tempérée en fonction de sa composition avant son entrée dans une cavité de moule (1) et ensuite réticulée par rayonnement ultraviolet et/ou visible, dans lequel la lumière ultraviolette ou visible provient de sources de rayonnement (5) qui sont disposées à l'intérieur de trous borgnes (12) dans un matériau transparent (4) d'une conduite d'amenée (3) vers la cavité de moule (1) ou à l'intérieur d'ouvertures (13) fermées d'un côté dans la conduite d'amenée (3) vers la cavité de moule (1), de sorte que les sources de rayonnement (5) sont approchées très près de la masse de silicone liquide, **caractérisé en ce que** la conduite d'amenée (3) est élargie et aplatie avant la cavité de moule (1), la surface de section transversale libre de la conduite d'amenée (3) restant de préférence toujours la même, qu'au moins une partie de la zone aplatie de la conduite d'amenée (3) est soit constituée d'un matériau transparent (4) et les sources de rayonnement (5) sont positionnées à l'intérieur de trous borgnes (12) dans le matériau transparent (4), soit les sources de rayonnement (5) se trouvent à l'intérieur d'ouvertures (13), les ouvertures (13) étant fermées à une extrémité par des lentilles insérées (14).

2. Procédé selon la revendication 1, **caractérisé en ce que** la masse de silicone liquide est préchauffée à une température de 35 °C à 75 °C, de préférence à une température de 40 °C à 60 °C, et particulièrement de préférence à une température de 45 °C à 50 °C.

3. Procédé selon la revendication 1 ou 2, **caractérisé en ce que** la cadence est choisie inférieure à 60 s, de préférence inférieure à 30 s, et particulièrement de préférence entre 10 s et 15 s.

4. Procédé selon la revendication 1, 2 ou 3, **caractérisé en ce que** la masse de silicone liquide est activée par un rayonnement ultraviolet et/ou visible à l'intérieur d'une cavité de moule (1) et/ou à l'intérieur de la conduite d'amenée (3) vers la cavité de moule (1).

5. Dispositif de traitement d'une masse de silicone liquide photo-activable, en particulier pour mettre en oeuvre un procédé selon l'une des revendications 1 à 4, qui est relié à un ou plusieurs récipients de stockage de masses de silicone liquides de faible viscosité par l'intermédiaire d'une conduite d'amenée (3), le dispositif étant constitué d'un moyen de mise à température (2) pour la masse de silicone, d'une conduite d'amenée (3) vers une cavité de moule (1) et d'une cavité de moule (1) pour une ou plusieurs cavités, au moins une partie de la conduite d'amenée (3) étant constituée d'un matériau transparent (4) et qu'une ou plusieurs sources de rayonnement (5) pour une lumière ultraviolette ou visible sont prévues à l'intérieur de trous borgnes (12) dans le matériau transparent (4), ou que la conduite d'amenée (3) est constituée d'un matériau non transparent et qu'une ou plusieurs sources de rayonnement (5) pour une lumière ultraviolette ou visible sont prévues à l'intérieur d'ouvertures (13) dans la conduite d'amenée (3) et les ouvertures (13) sont fermées à une extrémité par des lentilles insérées (14) ou par un thermoplastique moulé (9) inséré dans la cavité, **caractérisé en ce que** la conduite d'amenée (3) est élargie et aplatie avant la cavité de moule (1), la surface de section transversale libre de la conduite d'amenée (3) restant de préférence toujours la même, qu'au moins une partie de la zone aplatie de la conduite d'amenée (3) est soit constituée d'un matériau transparent (4) et les sources de rayonnement (5) sont positionnées à l'intérieur de trous borgnes (12) dans le matériau transparent (4), soit les sources de rayonnement (5) se trouvent à l'intérieur d'ouvertures (13), les ouvertures (13) étant fermées à une extrémité par des lentilles insérées (14).

6. Dispositif selon la revendication 5, **caractérisé en ce que** le moyen de mise à température (2) possède un canal de passage pour la masse de silicone avec un mélangeur statique intégré (6) ou le moyen de mise à température (2) est disposé autour d'un mélangeur statique (6).

7. Dispositif selon la revendication 5 ou 6, **caractérisé en ce que** des moyens supplémentaires pour la régulation de pression sous la forme d'un limiteur de pression de matériau (7) et éventuellement d'un adaptateur de tamisage (8) pour séparer les constituants non liquides ou visqueux dans la masse de silicone sont prévus dans la conduite d'amenée (3) vers la cavité de moule (1).

8. Dispositif selon l'une des revendications 5 à 7, **caractérisé en ce que** la zone aplatie de la conduite d'amenée (3) est directement adjacente à la cavité de moule (1) et est dimensionnée de telle sorte que l'épaisseur de la masse de silicone à traverser par le rayonnement est d'au plus 6 mm, de préférence d'au plus 3 mm dans la zone aplatie de la conduite d'amenée (3).

9. Dispositif selon l'une des revendications 5 à 8, **caractérisé en ce que** le matériau transparent (4) est constitué d'un polycarbonate ou d'un polyméthacrylate de méthyle.

10. Dispositif selon l'une des revendications 5, 6, 7 ou 9, **caractérisé en ce que** la surface de mise en forme du matériau transparent (4) de la cavité de moule (1) présente une structure de surface rugueuse.

11. Dispositif selon la revendication 10, **caractérisé en ce que** la rugosité du matériau transparent (4) de la cavité de moule (1) est comprise entre 21 ra et 27 ra, en conséquence entre 1,1 µm et 2,2 µm.

12. Dispositif selon l'une des revendications 5, 6, 7, 9 ou 10, **caractérisé en ce que** le dispositif est adapté au montage ultérieur sur des machines de moulage par injection existantes.

13. Dispositif selon la revendication 5, **caractérisé en ce que** la lentille (14) est en verre ou en matière plastique transparente.

14. Dispositif selon la revendication 5, **caractérisé en ce que** la source de rayonnement (5) est une lampe à LED ou une source de rayonnement sensiblement ponctuelle comparable.

15. Dispositif selon la revendication 14, **caractérisé en ce que** la lampe à LED possède une puissance absorbée de 1 à 20 watts.
